(19) Europäisches Patentamt
European Patent Office
Office européen des brevets

(11) **EP 3 665 744 B1**

(12) **FASCICULE DE BREVET EUROPEEN**

(45) Date de publication et mention
de la délivrance du brevet:
**13.10.2021 Bulletin 2021/41**

(21) Numéro de dépôt: **18748931.5**

(22) Date de dépôt: **07.08.2018**

(51) Int Cl.:
*H01Q 3/26* (2006.01)          *H04B 10/2575* (2013.01)

(86) Numéro de dépôt international:
**PCT/EP2018/071339**

(87) Numéro de publication internationale:
**WO 2019/030204 (14.02.2019 Gazette 2019/07)**

(54) **DISPOSITIF DE RÉCEPTION OPTIQUE D'UN SIGNAL PROVENANT D'UN RÉSEAU ANTENNAIRE À COMMANDE DE PHASE ET SYSTÈME ANTENNAIRE ASSOCIÉ**

VORRICHTUNG ZUR OPTISCHEN AUFNAHME EINES VON EINER PHASENGESTEUERTEN ANTENNENANORDNUNG KOMMENDEN SIGNALS UND ZUGEHÖRIGES ANTENNENSYSTEM

DEVICE FOR OPTICALLY RECEIVING A SIGNAL COMING FROM A PHASED ANTENNA ARRAY AND ASSOCIATED ANTENNA SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.08.2017 FR 1700843**

(43) Date de publication de la demande:
**17.06.2020 Bulletin 2020/25**

(73) Titulaire: **Thales**
**92400 Courbevoie (FR)**

(72) Inventeurs:
• **BOURDERIONNET, Jérome**
  **91767 Palaiseau (FR)**
• **FEUGNET, gilles**
  **91767 Palaiseau (FR)**
• **BRIGNON, Arnaud**
  **91767 Palaiseau (FR)**

(74) Mandataire: **Lavoix**
**2, place d'Estienne d'Orves**
**75441 Paris Cedex 09 (FR)**

(56) Documents cités:
**WO-A1-03/079101          US-A1- 2014 320 345**
**US-A1- 2017 063 461**

**Description**

La présente invention concerne un dispositif d'émission/réception optique, le dispositif étant propre à émettre ou recevoir un signal provenant d'un réseau antennaire à commande de phase. La présente invention concerne aussi un système antennaire comportant un tel dispositif.

Un réseau antennaire à commande de phase (aussi désigné par le terme anglais de « phased array antenna ») est un groupe d'antennes élémentaires alimentées avec des signaux radiofréquences dont la phase est ajustée de façon à obtenir le diagramme de rayonnement voulu. Un tel réseau antennaire est notamment utilisé dans le domaine des radars ou des télécommunications.

Pour les deux applications précédentes, il est souhaitable d'augmenter les capacités du réseau antennaire pour, par exemple, permettre au radar de pouvoir suivre plusieurs cibles simultanément. Pour cela, il est connu que chaque antenne élémentaire du réseau antennaire à commande de phase soit capable d'émettre plusieurs faisceaux radiofréquences correspondant chacun à un canal de télécommunication spécifique.

Pour cela, il est connu de réaliser du multiplexage en division spatial directement dans le domaine radiofréquence. Dans un tel cas, il est utilisé des circuits de conformation de faisceaux comportant des lignes à retard radiofréquences, des répartiteurs de puissance radiofréquences et des coupleurs directionnels radiofréquences. En sélectionnant la longueur des lignes à retard, il est obtenu les décalages de phases permettant le balayage souhaité pour le réseau antennaire. Similairement, les rapports de répartition de puissance contrôlés par les répartiteurs de puissance radiofréquences permettent de contrôler la distribution d'amplitude en ouverture. Pour obtenir un tel fonctionnement, des agencements de lignes à retard et de coupleurs directionnels sont connus comme les agencements ou matrices de Blass, Butler ou Nolen.

Un signal appliqué en entrée d'une ligne d'alimentation traverse ainsi la ligne en passant par une pluralité de points de croisement jusqu'à une extrémité de la ligne d'alimentation. A chaque point de croisement, une partie du signal est couplé via le coupleur directionnel dans la ligne de commande correspondante pour commander l'antenne élémentaire associée. La différence de longueur entre l'entrée et chaque point de croisement permet de contrôler la direction du faisceau émis par l'antenne élémentaire. Le diagramme d'émission est contrôlé par les coefficients de couplage de chaque coupleur directionnel. Toutefois, pour éviter les réflexions parasites aux extrémités de chaque ligne, des charges d'adaptations sont reliées à chaque ligne de commande et à chaque ligne d'alimentation aux extrémités. La conception du réseau consiste à sélectionner les valeurs de retards et de couplage appropriées pour obtenir le faisceau désiré.

Toutefois, lorsque les retards (la longueur des lignes à retard) et les coefficients de couplages sont définis, le diagramme d'émission est figé. En outre, en pratique, la gamme de valeurs de coefficients de couplages disponibles est limitée, ce qui limite le nombre de diagrammes d'émission accessibles.

La transposition de la même idée dans le domaine optique, appelé réseau de formation d'un faisceau optique, a fait l'objet de nombreuses études. De fait, l'emploi de liaisons optiques permet de réduire les pertes des câbles électriques ou des circuits électriques radiofréquences de plusieurs ordres de grandeur.

Les études effectuées ont porté sur des configurations d'optique en volume ou sur des circuits intégrés photoniques. Les circuits intégrés photoniques sont aussi désignés par l'acronyme PIC et permettent d'obtenir des implémentations présentant une compacité améliorée.

Dans chacun des cas, similairement à la version de réalisation du multiplexage en division spatial directement dans le domaine radiofréquence, le réseau de formation d'un faisceau optique est pourvu de M ports d'entrée et N ports de sortie et comporte une combinaison de lignes à retard ou de déphaseurs optiques, de coupleurs directionnels optiques afin de répartir les puissances optiques. La lumière injectée dans un port d'entrée est séparée et redirigée vers les N ports de sortie optiques avec une phase ou un délai et une amplitude spécifiques au port de sortie optique considéré. Ainsi, sur chaque port de sortie, se superposent plusieurs faisceaux optiques avec différentes fréquences, phases et informations radiofréquences spécifiques. Le faisceau optique de sortie complexe est détecté par une photodiode qui alimente une antenne élémentaire associée à la photodiode.

Les retards sont obtenus par des fibres optiques enroulées dans les configurations d'optique en volume et par des spirales dans le cas de circuits intégrés photoniques. Ainsi, similairement au cas d'une réalisation du multiplexage en division spatial directement dans le domaine radiofréquence, lorsque les retards (la longueur des lignes à retard) ou les phases et les coefficients de couplages sont définis, le diagramme d'émission est figé.

Pour obtenir un diagramme d'émission au moins en partie réglable, il est connu d'utiliser des résonateurs en anneau optique pour réaliser des lignes à retard optique réglables. Pour cela, il est utilisé le fait que lorsqu'une porteuse optique est modulée à l'aide d'un signal radiofréquence et se propage à travers un guide d'onde optique, le temps de propagation effectif du signal radiofréquence est déterminé par le retard de groupe du guide d'onde optique. Le retard de groupe est la dérivée de la réponse en phase du guide d'onde optique. Pour exploiter une telle propriété, il convient d'adapter les fréquences des faisceaux optiques aux fréquences de résonance des résonateurs. Ceci rend l'ensemble du système assez complexe à mettre en œuvre et à contrôler.

L'emploi de lignes à retard, par exemple des résonateurs en anneau optique, permet également d'obtenir un réseau antennaire ne présentant pas de phénomène de « squinting » signifiant littéralement « strabisme ». Un tel phénomène correspond au fait que la direction de pointage puisse varier en fonction de la fréquence radiofréquence. Cette propriété est notamment utile pour les applications large bande puisque, dans le cas où la bande passante est réduite, des déphaseurs ajustables sont utilisables pour obtenir un montage plus simple.

Les exemples de telles transpositions dans le domaine optique présentent plusieurs limitations.

D'une part, comme les canaux ont des fréquences centrales dans des gammes de plusieurs dizaines de GigaHertz, les pilotes électroniques impliqués sont relativement coûteux et compliqués à mettre en œuvre puisque plusieurs étages de multiplication de fréquence sont utilisés.

D'autre part, le déphasage en radiofréquence est obtenu en contrôlant la phase optique entre la porteuse optique et l'une des bandes latérales optiques obtenue après modulation (schéma de modulation simple bande). Le contrôle de la phase optique étant critique, il est usuellement intégré sur le même support (par exemple un PIC) les photodiodes et le réseau de formation d'un faisceau optique. Cela empêche, en pratique, que les récepteurs puissent être positionnés loin des antennes, ce qui en limite l'intérêt.

Des dispositifs optiques similaires sont également connus des documents US 2017/063461 A1, US 2014/320345 A1 et WO 03/079101 A1.

Il existe donc un besoin pour un dispositif optique permettant de gérer un réseau antennaire à commande de phase qui permette de placer le réseau antennaire à distance du dispositif optique.

Pour cela, la description propose un dispositif de réception optique, le dispositif de réception étant propre à recevoir un signal provenant d'un réseau antennaire à commande de phase, le réseau antennaire à commande de phase comportant N antennes élémentaires, N étant un nombre entier supérieur à 1, le dispositif de réception comportant une source lumineuse propre à générer une porteuse optique à une fréquence de référence et M faisceaux optiques en phase par rapport à une réplique de la porteuse optique et décalés en fréquence par rapport à la fréquence de référence, M étant un nombre entier supérieur à 1. Le dispositif comporte un circuit de collection des signaux issus des N antennes élémentaires, le circuit de collection comportant N voies reliées chacune à une antenne élémentaire respective, chaque voie comportant un modulateur propre à moduler au moins l'un parmi la phase et l'amplitude d'un signal incident selon une modulation. Le dispositif comporte un réseau de formation de faisceaux reliant M+1 premiers ports à N deuxièmes ports, chaque deuxième port étant relié à une voie respective des N voies, M premiers ports des M+1 premiers ports étant reliés respectivement à un des M faisceaux optiques et le premier port non relié à un des M faisceaux optiques étant un port de contrôle, le port de contrôle étant relié aux autres ports de sorte qu'une intensité optique maximale sur le port de contrôle corresponde à des signaux en phase sur les N deuxièmes ports. Le dispositif comporte une photodiode reliée au port de contrôle et propre à mesure l'intensité optique du signal du port de contrôle à la fréquence de référence, et un contrôleur propre à contrôler la modulation de chaque modulateur en fonction de l'intensité optique mesurée par la photodiode.

Suivant des modes de réalisation particuliers, le dispositif de réception optique comprend une ou plusieurs des caractéristiques suivantes, prise(s) isolément ou suivant toutes les combinaisons techniquement possibles :

- le circuit de collection comporte deux voies additionnelles, une des voies étant alimentée par la porteuse optique et l'autre voie alimentant la source lumineuse avec une réplique de la porteuse optique.
- le contrôleur est propre à contrôler la modulation de chaque modulateur en fonction de l'intensité optique mesurée par la photodiode à l'aide d'une technique choisie dans le groupe constitué de l'algorithme de descente de gradient, l'algorithme de Nelder-Mead, une technique à marquage de fréquence ou autres.
- le réseau de formation de faisceaux est une matrice de Blass ou une matrice de Butler ou une matrice de Nolan.
- le circuit de collection comporte des fibres multi-coeurs.
- chaque voie du circuit de collection comporte un filtre optique propre à supprimer une bande latérale.
- la source lumineuse comporte deux lasers à phase verrouillée.
- le dispositif de réception comporte une première partie comportant la source lumineuse et la photodiode et une deuxième partie comportant le réseau de formation de faisceaux, la première partie étant réalisée en InP et la deuxième partie étant réalisée en SiN ou en substrat sur isolant.

La présente description a également pour objet un système antennaire comportant un réseau antennaire à commande de phase, le réseau antennaire à commande de phase comportant N antennes élémentaires, N étant un nombre entier supérieur à 1, un dispositif de réception tel que décrit précédemment.

Suivant un mode de réalisation particulier, le système antennaire comporte, en outre, un dispositif d'émission optique pour commander le réseau antennaire à commande de phase, le dispositif d'émission comportant une source lumineuse propre à générer une porteuse optique à une fréquence de référence et M faisceaux optiques en phase par rapport à une réplique de la porteuse optique et décalés en fréquence par rapport à la fréquence de référence, M étant un nombre entier supérieur à 1. Le dispositif d'émission comporte un réseau de formation de faisceaux reliant M premiers ports à N deuxièmes ports, chaque premier port étant relié respectivement à un des M faisceaux optiques générés par la source lumineuse et chaque deuxième port étant propre à générer un signal de commande d'une des N antennes élémentaires.

Selon un mode de réalisation particulier, la source lumineuse du dispositif d'émission comprend deux sous-sources d'émission émettant chacune une onde lumineuse avec un premier écart en fréquence, la source lumineuse du dispositif de réception comprenant deux sous-sources de réception émettant chacune une onde lumineuse avec un deuxième écart en fréquence, le premier et le deuxième écart en fréquence étant identiques.

D'autres caractéristiques et avantages de l'invention apparaîtront à la lecture de la description qui suit de modes de réalisation de l'invention, donnée à titre d'exemple uniquement et en référence aux dessins qui sont :

- figure 1, une représentation d'un système antennaire comportant un réseau antennaire, un dispositif d'émission optique et un dispositif de réception optique,
- figure 2, une vue schématique du dispositif d'émission optique de la figure 1, et
- figure 3, une vue schématique du dispositif de réception optique de la figure 1.

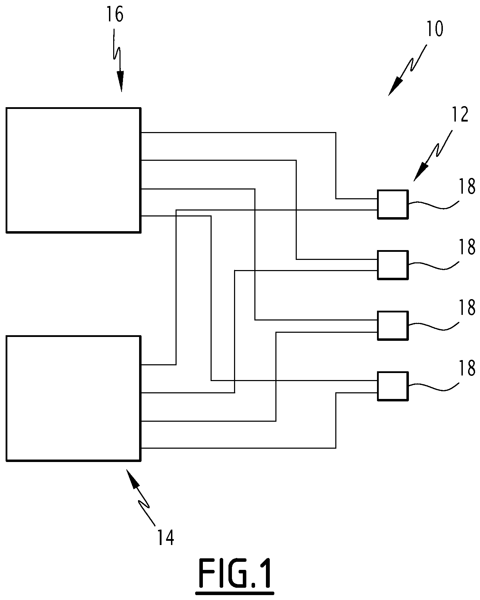

La figure 1 illustre un système antennaire 10 comportant un réseau antennaire 12, un dispositif d'émission optique 14 et un dispositif de réception optique 16.

Le réseau antennaire 12 est un réseau antennaire à commande de phase.

Le réseau antennaire 12 comporte N antennes élémentaires 18, N étant un nombre entier supérieur à 1. Dans l'exemple représenté, l'entier N est égal à 4.

Le dispositif d'émission optique 14 est propre à commander le réseau antennaire 12 à commande de phase pour que le réseau antennaire 12 émette un faisceau souhaité.

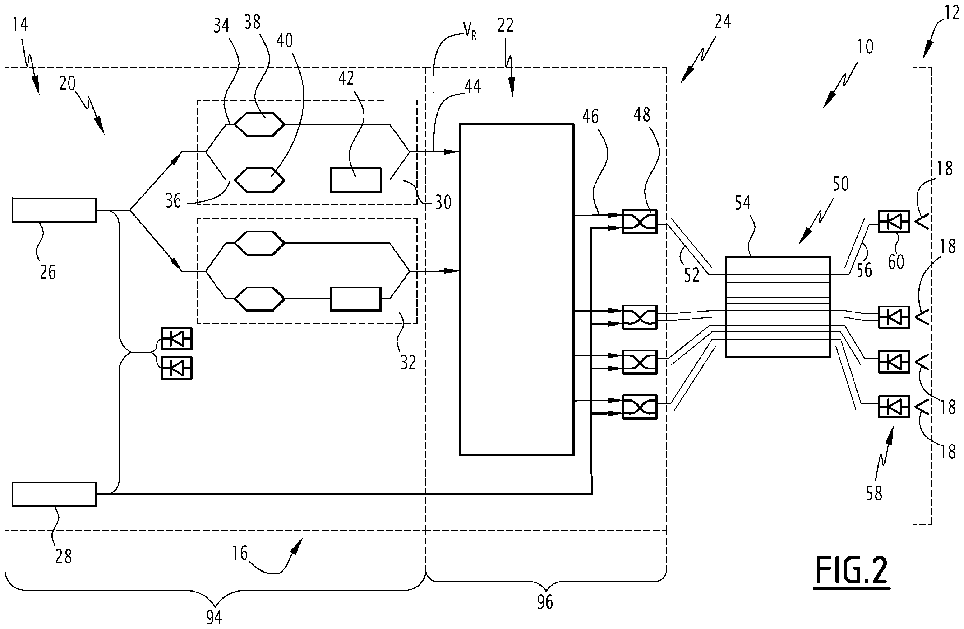

Un exemple de dispositif d'émission 14 est notamment illustré à la figure 2.

Le dispositif d'émission 14 comporte une source lumineuse 20 dite source lumineuse en émission 20, un réseau de formation de faisceaux 22 dit réseau de formation de faisceaux en émission 22 et un circuit de transmission 24.

La source lumineuse en émission 20 est propre à générer une porteuse optique à une fréquence de référence et M faisceaux optiques en phase par rapport à une réplique de la porteuse optique et décalés en fréquence par rapport à la fréquence de référence. M est un nombre entier supérieur à 1.

Dans l'exemple représenté, l'entier M est égal à 2.

Selon l'exemple proposé, la source lumineuse en émission 20 comporte deux lasers à phase verrouillée 26, 28 (aussi appelés sous-sources d'émission) et des modulateurs à suppression de porteuse et à bande latérale unique 30, 32.

Dans l'exemple de la figure 2, chaque laser 26, 28 est un laser à rétroaction répartie plus communément appelé laser DFB (acronyme du terme anglais « Distributed FeedBack laser » signifiant littéralement « laser à rétroaction répartie »). Un tel laser est un laser utilisant un réseau de Bragg qui permet de choisir la longueur d'onde d'émission.

Un des deux lasers DFB 28 est propre à générer la porteuse optique à la fréquence de référence $v_0$.

L'autre laser DFB 26 est propre à générer une onde à la fréquence $v_1$ et est en liaison avec les modulateurs à suppression de porteuse et à bande latérale unique.

Plus précisément, la source lumineuse 20 comporte un modulateur à suppression de porteuse et à bande latérale 30, 32 unique pour chacun des M faisceaux.

Un modulateur à suppression de porteuse et à bande latérale unique est aussi désigné par l'acronyme SSB-SCM pour le terme anglais de « Single-SideBand Suppression-Carrier Modulator ».

De manière simplifiée, un tel modulateur 30, 32 comporte deux bras 34 et 36, le premier bras 34 comportant un modulateur de type I 38 alimenté par un signal radiofréquence RF et le deuxième bras 36 comportant un modulateur de type Q 40 alimenté par le signal radiofréquence RF en série avec une unité de déphasage de $\pi/2$ 42. L'interférence entre les deux bras 34 et 36 permet d'obtenir un signal à la fréquence $v_1 + v_{RF}$.

En alimentant chaque modulateur 30, 32 par un signal radiofréquence à une fréquence spécifique, il est obtenu en sortie de chaque modulateur 30, 32 un faisceau en phase par rapport à une réplique de la porteuse optique et décalé en fréquence par rapport à la fréquence de référence de la fréquence spécifique.

Le réseau de formation de faisceaux en émission 22 relie M premiers ports en émission 44 à N deuxièmes ports en émission 46.

Un réseau de formation de faisceaux est aussi désigné sous le terme anglais de « Optical Beam Forming Network ».

Chaque premier port en émission 44 est relié respectivement à un des M faisceaux optiques générés par la source lumineuse en émission 20.

Pour la suite, chaque premier port est indicé par un entier k compris entre 1 et M pour l'émission et compris entre 1 et M+1 pour la réception.

Chaque deuxième port en émission 46 est propre à générer un signal de commande d'une des N antennes élémentaires 18.

Pour la suite, chaque deuxième port est indicé par un entier h compris entre 1 et N.

Le réseau de formation de faisceaux en émission 22 est par exemple une matrice de Blass implémentée optiquement.

Le circuit de transmission 24 est propre à assurer que chaque signal de commande est transmis à une antenne élémentaire 18 respective.

Dans l'exemple représenté, le circuit de transmission 24 comporte, après chaque deuxième port en émission 46, un combineur 48 avec une réplique de la porteuse optique permettant d'obtenir un signal recombiné.

En variante, la recombinaison est effectuée à l'aide d'un combineur d'interférences multimodes MMI.

Le circuit de transmission 24 comporte ensuite une liaison fibrée 50 vers les N antennes élémentaires 18. Ce circuit de transmission est propre à ne pas induire de retards variables entre les N voies.

Pour chaque signal à transporter, la liaison fibrée 50 comporte, par exemple, une première fibre monomode 52 suivie d'une fibre multi-cœurs 54 et d'une deuxième fibre monomode 56. La première fibre monomode 52 est reliée à la sortie du combineur 48 alors que la deuxième fibre monomode 56 est reliée à un convertisseur 58 alimentant une antenne élémentaire 18.

Le convertisseur 58 permet de convertir un signal optique en signal radiofréquence.

Chaque convertisseur 58 comporte au moins une photodiode 60.

Le dispositif de réception optique 16 est propre à recevoir un signal provenant du réseau antennaire 12 à commande de phase.

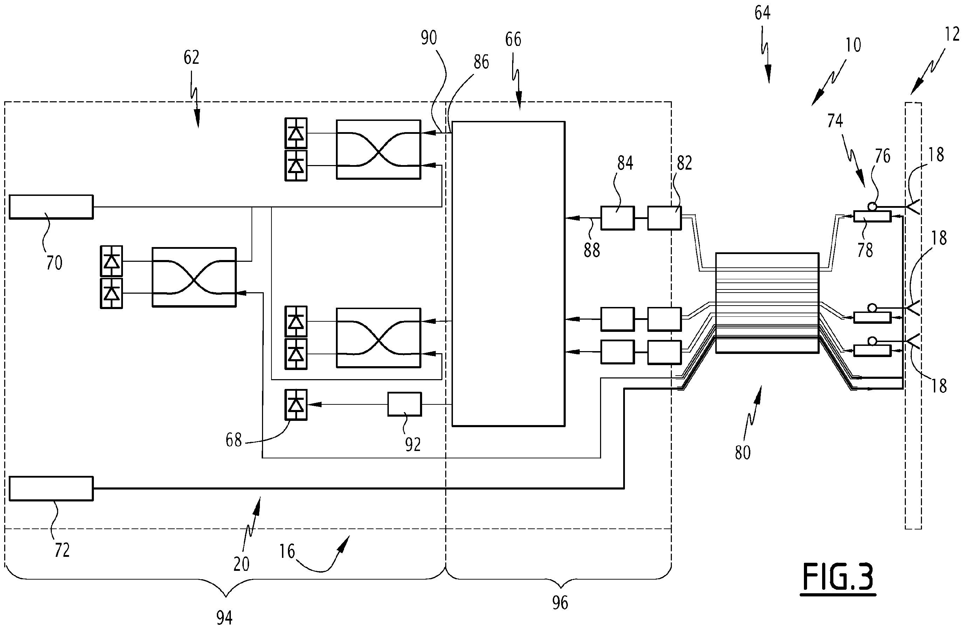

Un exemple de dispositif de réception 16 est notamment illustré à la figure 3.

Le dispositif de réception 16 comporte une source lumineuse 62 dite source lumineuse en réception 62, un circuit de collection 64, un réseau de formation de faisceaux 66 dit réseau de formation de faisceaux en réception 66, une photodiode 68 et un contrôleur non représenté.

La source lumineuse en réception 62 est propre à générer une porteuse optique à une fréquence de référence et M faisceaux optiques. Les M faisceaux optiques sont en phase par rapport à une réplique de la porteuse optique et décalés en fréquence par rapport à la fréquence de référence.

Selon l'exemple proposé, la source lumineuse en réception 62 comporte deux lasers à phase verrouillée 70 et 72 (aussi appelés sous-sources de réception). Le laser 72 est propre à générer la porteuse optique à la fréquence $v_2$. Le laser 70 est propre à générer la fréquence $v_3$.

Le circuit de collection 64 est un circuit de collection des signaux issus des N antennes élémentaires 18.

Le circuit de collection 64 comporte N voies 74 reliées chacune à une antenne élémentaire 18 respective, chaque voie 74 comportant un convertisseur 76, un modulateur 78, une liaison fibrée 80, un filtre optique 82 et un autre modulateur (de phase) 84.

Chaque modulateur 78 est propre à moduler au moins l'un parmi la phase et l'amplitude d'un signal incident selon une modulation.

Chaque filtre optique 82 est propre à supprimer une bande latérale.

Le circuit de collection 64 comporte, en outre, deux voies additionnelles, une des voies étant alimentée par la porteuse optique et l'autre voie alimentant la source lumineuse en réception 62 avec une réplique de la porteuse optique pour assurer que les M faisceaux optiques sont en phase par rapport à une réplique de la porteuse optique et décalés en fréquence par rapport à la fréquence de référence.

Plus précisément, la source lumineuse en réception 62 est agencée pour générer M faisceaux à $v_3 + v_{RF,k}$.

Le réseau de formation de faisceaux en réception 66 relie (M+1) premiers ports en réception 86 à N deuxièmes ports en réception 88.

Chaque deuxième port en réception 88 est relié à une voie 74 respective des N voies.

M premiers ports en réception 90 des (M+1) premiers ports en réception 86 sont reliés respectivement à un des M faisceaux optiques.

Le premier port en réception 86 non relié à un des M faisceaux optiques est un port de contrôle 92.

Le port de contrôle 92 est relié aux autres ports en réception 86 et 88 de sorte qu'une intensité optique maximale sur le port de contrôle 92 corresponde à des signaux en phase sur les N deuxièmes ports en réception 88.

Le réseau de formation de faisceaux en réception 66 est par exemple une matrice de Blass, ou de Butler, ou de Nolen.

La photodiode 68 est reliée au port de contrôle 92 et propre à mesurer l'intensité optique du signal du port de contrôle 92 à la fréquence de référence $v_2$.

Le contrôleur est propre à contrôler la modulation de chaque modulateur 84 en fonction de l'intensité optique mesurée par la photodiode 68.

Par exemple, pour cela, le contrôleur est propre à mettre en œuvre une technique d'algorithme de descente de gradient.

En variante, le contrôleur est propre à mettre en œuvre une technique d'algorithme de Nelder-Mead.

Selon un autre mode de réalisation, le contrôleur est propre à mettre en œuvre une technique à marquage de fréquence.

Dans l'exemple proposé, le dispositif de réception 16 comporte une première partie 94 comportant la source lumineuse en réception 62 et la photodiode 68 et une deuxième partie 96 comportant le réseau de formation de faisceaux en réception 66, la première partie 94 étant réalisée en InP et la deuxième partie 96 étant réalisée en SiN.

En variante, la deuxième partie 96 est réalisée en silicium sur isolant aussi désignée par l'acronyme SOI. Par définition, une structure en silicium sur isolant est une structure constituée d'un empilement d'une couche de silicium sur une couche d'isolant.

Le fonctionnement du système antennaire 10 est décrit dans ce qui suit.

En émission, il est généré M+1 faisceaux optiques cohérents et dont la phase est verrouillée à l'aide des deux lasers 26, 28. N signaux radiofréquences sont générés pour moduler M faisceaux optiques dans la porteuse. Les bandes latérales sont filtrées et passent à travers le réseau de formation de faisceaux en émission 22. Le réseau de formation de faisceaux en émission 22 permet d'obtenir la distribution optique en phase des M canaux.

En mélangeant les N sorties du réseau de formation de faisceaux en émission 22 avec N répliques respectives du (M+1)-ième faisceau optique utilisé comme oscillateur local, deux phénomènes ont lieu. D'une part, il y a une conversion de la distribution de phase optique en distribution de phase radiofréquence après le mélange. D'autre part, la fréquence du k-ième canal après le mélange est donnée par $v_{RF,k} + v_1 - v_0$.

En d'autres termes, ces deux phénomènes correspondent aux fonctions désirées de conversion en fréquence radiofréquence de manière hétérodyne par augmentation et de formation du faisceau dans le domaine radiofréquence.

Plus précisément, le champ optique obtenu en sortie du h-ième deuxième port en émission 46 peut s'exprimer comme suit :

$$E_h = E_0 \sum_{k=1}^{M} \alpha_{k,h} e^{i[2\pi v_k t + \varphi_{k,h}]} = E_0 \sum_{k=1}^{M} \alpha_{k,h} e^{i[2\pi(v_{RF,k}+v_1)t + \varphi_{k,h}]}$$

où $v_k = v_{RF,k} + v_1, \alpha_{k,h}$ et $\varphi_{k,h}$ sont respectivement la fréquence optique du canal k (entre 1 et M) en 46, les pondérations d'amplitude et de phase appliquées par le réseau de formation de faisceaux en émission 22 appliqué aux champs optiques des premiers ports en émission 44 en supposant que l'amplitude du champ optique $E_0$ est la même pour chaque champ optique.

Le champ optique obtenu après le h-ième combinateur 48 et avant d'entrer dans la h-ième photodiode 60, qui alimente la h-ième antenne élémentaire 18, peut être exprimée comme suit:

$$E_{h,recomb} = E_0 \sum_{k=1}^{M} [\alpha_{k,h} e^{i[2\pi v_k(t-\tau_h)+\varphi_{k,h}]} + \alpha_0 e^{i[2\pi v_0(t-\tau_h)+\varphi_0]}]$$

$$= E_0 \sum_{k=1}^{M} [\alpha_{k,h} e^{i[2\pi(v_{RF,k}+v_1)(t-\tau_h)+\varphi_{k,h}]} + \alpha_0 e^{i[2\pi v_0(t-\tau_h)+\varphi_0]}]$$

où $\tau_h$ est le temps de propagation à travers le h-ième canal, le temps de propagation est le temps de propagation entre le h-ième combineur 48 et la h-ième photodiode 60.

Le signal électrique après photodétection par la h-ième photodiode 60 est exprimé par :

$$i_{PD,h} = \eta |E_{h,recomb}|^2$$

Il en résulte que :

$$i_{PD,h} = i_{DC} + 2\alpha_0 I_0 \sum_{k=1}^{M} \alpha_{k,h} cos\left[\left(2\pi(v_{RF,k}+v_1-v_0)\right)(t-\tau_h) + \varphi_{k,h} - \varphi_0\right]$$

$$+ 2I_0 \sum_{k=1}^{M} \sum_{\substack{l=1 \\ l \neq k}}^{M} \alpha_{k,h} \alpha_{l,h} cos\left[\left(2\pi(v_{RF,k}-v_{RF,l})\right)(t-\tau_h) + \varphi_{k,h} - \varphi_{l,h}\right]$$

Ce signal électrique contient :

- une partie DC $i_{DC}$,
- un deuxième terme correspondant à la somme de tous les signaux radiofréquences, pondérés en phase et en amplitude par le réseau de formation de faisceaux en émission 22. Les signaux radiofréquences qui se trouvaient dans le domaine basse fréquence sont ainsi augmentés d'une valeur de fréquence de $v_1 - v_0$ qui peut s'élever à quelques GigaHertz,
- un troisième terme correspondant à un terme parasite comportant le mélange des bandes latérales radiofréquences.

Le terme parasite peut être supprimé par filtrage électrique (avant chaque antenne élémentaire 18), en particulier dans le cas typique où $|v_0 - v_{RF,k}| \gg |v_{RF,k} - v_{RF,l}|$, les éléments composant le terme parasite ayant alors une fréquence plus faible que les signaux radiofréquence qui vont alimenter l'antenne élémentaire 18.

En réception, le système antennaire 10 est similaire à l'émission avec un processus de conversion en fréquence par diminution.

En outre, le système antennaire 10 comporte un canal spécifique à l'onde porteuse qui permet de compenser les fluctuations de phase induites par une liaison fibrée entre le réseau à formation de faisceau optique et le réseau antennaire 12.

En l'absence de compensation des fluctuations de phase, tout décalage de phase entraîne une dégradation des faisceaux obtenus dans les premiers ports du réseau de formation de faisceaux optiques.

Le système antennaire 10 proposé permet par une liaison optique de transmettre à la fois l'information radiofréquence de chaque canal et des signaux de commande nécessaires pour diriger chaque faisceau radiofréquence dans la direction souhaitée. Comme les informations de commande peuvent être modifiées dynamiquement, chaque direction de canal est donc orientable dynamiquement. Étant donné que les signaux de commande sont envoyés par un centre de commande central, ce système antennaire 10 rend le contrôle du réseau antennaire 12 placé à distance assez simple.

La capacité de contrôler indépendamment la direction et le contenu en information radiofréquence de chaque canal, à savoir le multiplexage en division spatiale, permet aux radars de suivre plusieurs cibles et d'obtenir une plus grande bande-passante effective pour des applications de télécommunication.

Dans l'exemple décrit, le décalage par augmentation de fréquence à l'émission dépend de $v_1 - v_0$ alors qu'à la réception le décalage en fréquence par diminution de fréquence dépend de $v_3 - v_2$. Ainsi, le système fonctionne lorsque $|v_1 - v_0| = |v_3 - v_2|$. Ceci est réalisable de plusieurs manières. En particulier, le circuit d'émission et de réception peuvent partager le même oscillateur radiofréquence pour la boucle de phase.

D'autres modes de réalisation sont envisageables.

Par exemple, selon un mode de réalisation, la source lumineuse est propre à émettre un peigne de fréquence dont chaque peigne est séparé pour former un des M faisceaux.

Dans un cas particulier, la séparation est réalisée à l'aide de filtre optique.

Par exemple, le filtre optique est un filtre optique passif ou une cavité laser.

En variante, la source lumineuse comporte (M+1) lasers indépendants.

Selon un mode de réalisation, les sources lumineuses en émission 20 et en réception peuvent reposer sur les mêmes lasers.

Selon un mode de réalisation, l'écart en fréquence entre les ondes émises par les sources lumineuses en émission est identique à l'écart en fréquence entre les ondes émises par les sources lumineuses en réception.

## Revendications

1. Dispositif de réception optique (16), le dispositif de réception (16) étant propre à recevoir un signal provenant d'un réseau antennaire (12) à commande de phase, le réseau antennaire (12) à commande de phase comportant N antennes élémentaires (18), N étant un nombre entier supérieur à 1, le dispositif de réception (16) comportant :

  - une source lumineuse (62) propre à générer une porteuse optique à une fréquence de référence et M faisceaux optiques en phase par rapport à une réplique de la porteuse optique et décalés en fréquence par rapport à la fréquence de référence, M étant un nombre entier supérieur à 1,
  - un circuit de collection (64) des signaux issus des N antennes élémentaires (18), le circuit de collection (64) comportant N voies (74) reliées chacune à une antenne élémentaire (18) respective, chaque voie (74) comportant un modulateur (78) propre à moduler au moins l'un parmi la phase et l'amplitude d'un signal incident selon une modulation,
  - un réseau de formation de faisceaux (66) reliant M+1 premiers ports (86) à N deuxièmes ports (88), chaque deuxième port (88) étant relié à une voie (74) respective des N voies (74), M premiers ports (90) des M+1 premiers ports (86) étant reliés respectivement à un des M faisceaux optiques,
le dispositif de réception (16) étant **caractérisé en ce que** :

- le premier port (86) non relié à un des M faisceaux optiques est un port de contrôle (92), le port de contrôle (92) étant relié aux autres ports (86, 88) de sorte qu'une intensité optique maximale sur le port de contrôle (92) corresponde à des signaux en phase sur les N deuxièmes ports (88),
- le dispositif de réception comprend une photodiode (68) reliée au port de contrôle (92) et propre à mesure l'intensité optique du signal du port de contrôle (92) à la fréquence de référence, et
- le dispositif de réception comprend un contrôleur propre à contrôler la modulation de chaque modulateur (76) en fonction de l'intensité optique mesurée par la photodiode (68).

2. Dispositif de réception selon la revendication 1, dans lequel le circuit de collection (64) comporte deux voies additionnelles, une des voies étant alimentée par la porteuse optique et l'autre voie alimentant la source lumineuse avec une réplique de la porteuse optique.

3. Dispositif de réception selon la revendication 1 ou 2, dans lequel le contrôleur est propre à contrôler la modulation de chaque modulateur (78) en fonction de l'intensité optique mesurée par la photodiode (68) à l'aide d'une technique choisie dans le groupe constitué de l'algorithme de descente de gradient, l'algorithme de Nelder-Mead, une technique à marquage de fréquence.

4. Dispositif de réception selon l'une quelconque des revendications 1 à 3, dans lequel le réseau de formation de faisceaux (66) est une matrice de Blass, ou de Butler, ou de Nolen.

5. Dispositif de réception selon l'une quelconque des revendications 1 à 4, dans lequel le circuit de collection (64) comporte des fibres multi-coeurs.

6. Dispositif de réception selon l'une quelconque des revendications 1 à 5, dans lequel chaque voie du circuit de collection (64) comporte un filtre optique (82) propre à supprimer une bande latérale.

7. Dispositif de réception selon l'une quelconque des revendications 1 à 6, dans lequel la source lumineuse (62) comporte deux lasers (70, 72) à phase verrouillée.

8. Dispositif de réception selon l'une quelconque des revendications 1 à 7, dans lequel le dispositif de réception (16) comporte une première partie (94) comportant la source lumineuse (62) et la photodiode (68) et une deuxième partie (96) comportant le réseau de formation de faisceaux (66), la première partie (94) étant réalisée en InP et la deuxième partie (96) étant réalisée en SiN ou en silicium sur isolant.

9. Système antennaire (10) comportant :

- un réseau antennaire (12) à commande de phase, le réseau antennaire (12) à commande de phase comportant N antennes élémentaires (18), N étant un nombre entier supérieur à 1, et
- un dispositif de réception (16) selon l'une quelconque des revendications 1 à 8.

10. Système antennaire (10) selon la revendication 9, le système antennaire (10) comportant, en outre, un dispositif d'émission optique (14) pour commander le réseau antennaire (12) à commande de phase, le dispositif d'émission (14) comportant :

- une source lumineuse (20) propre à générer une porteuse optique à une fréquence de référence et M faisceaux optiques en phase par rapport à une réplique de la porteuse optique et décalés en fréquence par rapport à la fréquence de référence, M étant un nombre entier supérieur à 1, et
- un réseau de formation de faisceaux (22) reliant M premiers ports (44) à N deuxièmes ports (46), chaque premier port (44) étant relié respectivement à un des M faisceaux optiques générés par la source lumineuse (20) et chaque deuxième port (46) étant propre à générer un signal de commande d'une des N antennes élémentaires (18).

11. Système antennaire (10) selon la revendication 10, dans lequel la source lumineuse (20) du dispositif d'émission (14) comprend deux sous-sources d'émission (26, 28) émettant chacune une onde lumineuse avec un premier écart en fréquence, la source lumineuse (62) du dispositif de réception (16) comprenant deux sous-sources de réception (70, 72) émettant chacune une onde lumineuse avec un deuxième écart en fréquence, le premier et le deuxième écart en fréquence étant identiques.

**Patentansprüche**

1. Optische Empfangsvorrichtung (16), wobei die optische Empfangsvorrichtung (16) dazu geeignet ist, ein Signal zu empfangen, welches von einem phasengesteuerten Antennennetzwerk (12) stammt, wobei das phasengesteuerte Antennennetzwerk (12) N Elementarantennen (18) aufweist, wobei N eine ganze Zahl größer als 1 ist, wobei die optische Empfangsvorrichtung (16) aufweist:

   - eine Lichtquelle (62), welche dazu geeignet ist, einen optischen Träger mit einer Referenzfrequenz und M optische Strahlen, welche bezüglich einer Nachbildung des optischen Trägers in Phase sind und bezüglich der Referenzfrequenz frequenzverschoben sind, zu erzeugen, wobei M eine ganze Zahl größer als 1 ist,
   - eine Schaltung zum Sammeln (64) von Signalen, welche von den N Elementarantennen (18) ausgegeben werden, wobei die Schaltung zum Sammeln (64) N Pfade (74), welche jeweils mit einer zugehörigen Elementarantenne (18) verbunden sind, aufweist, wobei jeder Pfad (74) einen Modulator (78) aufweist, welcher dazu geeignet ist, mindestens eine von der Phase und der Amplitude eines einkommenden Signals gemäß einer Modulation zu modulieren,
   - ein Strahlformungsnetzwerk (66), welches M+1 erste Anschlüsse (86) mit N zweiten Anschlüssen (88) verbindet, wobei jeder zweite Anschluss (88) mit einem jeweiligen Pfad (74) von den N Pfaden (74) verbunden ist, wobei M erste Anschlüsse (90) von den M+1 ersten Anschlüssen (86) jeweils mit einem von den M optischen Strahlen verbunden sind,
   wobei die Empfangsvorrichtung (16) **dadurch gekennzeichnet ist, dass**:
   - der erste Anschluss (86), welcher nicht mit einem von den M optischen Strahlen verbunden ist, ein Steueranschluss (92) ist, wobei der Steueranschluss (92) mit anderen Anschlüssen (86, 88) derart verbunden ist, dass eine maximale optische Intensität an dem Steueranschluss (92) mit In-Phase-Signalen an den N zweiten Anschlüssen (88) korrespondiert,
   - die Empfangsvorrichtung eine Photodiode (68) aufweist, welche mit dem Steueranschluss (92) verbunden ist und dazu geeignet ist, die optische Intensität des Signals des Steueranschlusses (92) bei der Referenzfrequenz zu messen, und
   - die Empfangsvorrichtung eine Steuereinrichtung aufweist, welche dazu geeignet ist, die Modulation jedes Modulators (76) in Abhängigkeit von der durch die Photodiode (68) gemessenen optischen Intensität zu steuern.

2. Empfangsvorrichtung nach dem Anspruch 1, wobei die Schaltung zum Sammeln (64) zwei zusätzliche Pfade aufweist, wobei ein Pfad durch den optischen Träger gespeist wird und der andere Pfad die Lichtquelle mit einer Nachbildung des optischen Trägers speist.

3. Empfangsvorrichtung nach dem Anspruch 1 oder 2, wobei die Steuereinrichtung dazu geeignet ist, die Modulation jedes Modulators (76) in Abhängigkeit von der durch die Photodiode (68) gemessenen optischen Intensität mit Hilfe einer Technik zu steuern, welche aus der Gruppe, welche durch den Gradientenabstiegs-Algorithmus, den Nelder-Mead-Algorithmus, einer Frequenzmarkierungstechnik gebildet ist, ausgewählt ist.

4. Empfangsvorrichtung nach einem der Ansprüche 1 bis 3, wobei das Strahlformungsnetzwerk (66) eine Blass- oder eine Butler- oder eine Nolen-Matrix ist.

5. Empfangsvorrichtung nach einem der Ansprüche 1 bis 4, wobei die Schaltung zum Sammeln (64) Mehrkern-Fasern aufweist.

6. Empfangsvorrichtung nach einem der Ansprüche 1 bis 5, wobei jeder Pfad der Schaltung zum Sammeln (64) einen optischen Filter (82), welcher dazu geeignet ist, ein Seitenband zu unterdrücken, aufweist.

7. Empfangsvorrichtung nach einem der Ansprüche 1 bis 6, wobei die Lichtquelle (62) zwei Laser (70, 72) mit Phasenkopplung aufweist.

8. Empfangsvorrichtung nach einem der Ansprüche 1 bis 7, wobei die Empfangsvorrichtung (16) einen ersten Abschnitt (94), welcher die Lichtquelle (62) und die Photodiode (68) aufweist, und einen zweiten Abschnitt (96), welcher das Strahlformungsnetzwerk (66) aufweist, aufweist, wobei der erste Abschnitt (94) aus InP umgesetzt ist und wobei der zweite Abschnitt (96) aus SiN oder aus Silizium-auf-Isolator umgesetzt ist.

9. Antennensystem (10), aufweisend:

   - ein phasengesteuertes Antennennetzwerk (12), wobei das phasengesteuerte Antennennetzwerk (12) N Elementarantennen (18) aufweist, wobei N eine ganze Zahl größer als 1 ist, und
   - eine optische Empfangsvorrichtung (16) gemäß einem der Ansprüche 1 bis 8.

10. Antennensystem (10) nach Anspruch 9, wobei das Antennensystem (10) ferner eine optische Emissionsvorrichtung (14) zum Ansteuern des phasengesteuerten Antennennetzwerks (12) aufweist, wobei die Emissionsvorrichtung (14) aufweist:

    - eine Lichtquelle (20), welche dazu geeignet ist, einen optischen Träger mit einer Referenzfrequenz und M optische Strahlen, welche bezüglich einer Nachbildung des optischen Trägers in Phase sind und bezüglich der Referenzfrequenz frequenzverschoben sind, zu erzeugen, wobei M eine ganze Zahl größer als 1 ist, und
    - ein Strahlformungsnetzwerk (22), welches M erste Anschlüsse (44) mit N zweiten Anschlüssen (46) verbindet, wobei jeder erste Anschluss (44) jeweils mit einem von den M optischen Strahlen, welche durch die Lichtquelle (20) erzeugt werden, verbunden ist und jeder zweite Anschluss (46) dazu geeignet ist, ein Signal zum Steuern von einer der N Elementarantennen (18) zu erzeugen.

11. Antennensystem (10) nach Anspruch 10, wobei die Lichtquelle (20) der Emissionsvorrichtung (14) zwei Emission-Unterquellen (26, 28) aufweist, wovon jede eine Lichtwelle mit einem ersten Frequenzunterschied aussendet, wobei die Lichtquelle (62) der Empfangsvorrichtung (16) zwei Empfang-Unterquellen (70, 72) aufweist, wovon jede eine Lichtwelle mit einem zweiten Frequenzunterschied aussendet, wobei der erste und der zweite Frequenzunterschied identisch sind.

## Claims

1. An optical reception device (16), the reception device (16) being able to receive a signal from a phased antenna array (12), the phased antenna array (12) including N elementary antennas (18), N being an integer greater than 1, the reception device (16) including:

   - a light source (62) adapted to generate an optical carrier at a reference frequency and M phased optical beams relative to a replica of the optical carrier and which are frequency-shifted relative to the reference frequency, M being an integer greater than 1,
   - a collection circuit (64) for the signals from the N elementary antennas (18), the collection circuit (64) including N paths (74) each connected to a respective elementary antenna (18), each path (74) including a modulator (78) able to modulate at least one of the phase and the amplitude of an incident signal according to a modulation,
   - a beam-forming network (66) connecting M+1 first ports (86) to N second ports (88), each second port (88) being connected to a respective path (74) of the N paths (74), M first ports (90) of the M+1 first ports (86) being connected respectively to one of the M optical beams and the first port (86) not connected to one of the M optical beams being a control port (92), the control port (92) being connected to the other ports (86, 88) so that a maximum optical intensity on the control port (92) corresponds to phased signals on the N second ports (88),
   - a photodiode (68) connected to the control port (92) and able to measure the optical intensity of the signal of the control port (92) at the reference frequency, and
   - a controller adapted to control the modulation of each modulator (76) as a function of the optical intensity measured by the photodiode (68).

2. The reception device according to claim 1, wherein the collection circuit (64) includes two additional paths, one of the paths being supplied by the optical carrier and the other path supplying the light source with a replica of the optical carrier.

3. The reception device according to claim 1 or 2, wherein the controller is able to control the modulation of each modulator (78) as a function of the optical intensity measured by the photodiode (68) using a technique chosen from the group made up of the gradient descent algorithm, the Nelder-Mead algorithm, a frequency marking technique.

4. The reception device according to any one of claims 1 to 3, wherein the beam-forming network (66) is a Blass, or Butler, or Nolen matrix.

5. The reception device according to any one of claims 1 to 4, wherein the collection circuit (64) includes multi-core fibers.

6. The reception device according to any one of claims 1 to 5, wherein each path of the collection circuit (64) includes an optical filter (82) able to eliminate a sideband.

7. The reception device according to any one of claims 1 to 6, wherein the light source (62) includes two phase-locked lasers (70, 72).

8. The reception device according to any one of claims 1 to 7, wherein the receiving device (16) includes a first part (94) including the light source (62) and the photodiode (68) and a second part (96) including the beam-forming network (66), the first part (94) being made from InP and the second part (96) being made from SiN or substrate-on-insulator.

9. An antenna system (10) including:

   - a phased antenna array (12), the phased antenna array (12) including N elementary antennas (18), N being an integer greater than 1, and
   - a reception device (16) according to any one of claims 1 to 8.

10. The antenna system (10) according to claim 9, the antenna system (10) further including an optical emission device (14) for controlling the phased antenna array (12), the emission device (14) including:

   - a light source (20) adapted to generate an optical carrier at a reference frequency and M phased optical beams relative to a replica of the optical carrier and which are frequency-shifted relative to the reference frequency, M being an integer greater than 1, and
   - a beam-forming network (22) connecting M first ports (44) to N second ports (46), each first port (44) respectively being connected to one of the M optical beams generated by the light source (20) and each second port (46) being adapted to generate a control signal of one of the N elementary antennas (18).

11. The antenna system (10) according to claim 10, wherein the light source (20) of the emission device (14) comprises two emission sub-sources (26, 28) each emitting a light wave with a first frequency gap, the light source (62) of the reception device (16) comprising two reception sub-sources (70, 72) each emitting a light wave with a second frequency gap, the first and the second frequency gaps being identical.

## FIG.1

## FIG.2

EP 3 665 744 B1

EP 3 665 744 B1

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2017063461 A1
- US 2014320345 A1

- WO 03079101 A1